# EUROPÄISCHE PATENTANMELDUNG

(11) **EP 1 900 965 A1**
(43) Veröffentlichungstag der Anmeldung: **19.03.2008**
(21) Anmeldenummer: 06019449.5
(22) Anmeldetag: 18.09.2006
(51) Int. Cl.: F16F 13/08

(54) **Hydrofeder**

(71) Anmelder: Carl Freudenberg KG, 69469 Weinheim (DE)
(72) Erfinder: Erl, Andreas, 16761 Henningsdorf (DE); Hack, Rüdiger, 67346 Speyer (DE)

(57) **Zusammenfassung**

Hydrofeder (1), umfassend ein Traglager (2) und ein Auflager (3) die durch eine konusförmige Feder (4) miteinander verbunden sind, wobei das Auflager (3) als Topf (5) ausgebildet ist und die Feder (4) und der Topf (5) einen Raum (6) begrenzen der zumindest teilweise mit Flüssigkeit befüllt ist, wobei der Topf (5) mit Einrichtungen (7) verbunden ist, die außerhalb des Raums (6) angeordnet sind.

## Beschreibung

### Technisches Gebiet

Die Erfindung betrifft eine Hydrofeder, umfassend ein Traglager und ein Auflager, die durch eine konusförmige Feder miteinander verbunden sind, wobei das Auflager als Topf ausgebildet ist und die Feder und der Topf einen Raum begrenzen der zumindest teilweise mit Flüssigkeit befüllt ist.

### Stand der Technik

Derartige Hydrofedern sind aus der EP 1 369 616 A1 bekannt. Hydrofedern dieser Art werden zur Lagerung schwerer Maschinen, beispielsweise von Drehgestellen von Schienenfahrzeugen eingesetzt. Die Feder dieser Hydrofedern besteht aus einem Elastomer und durch die konusförmige Gestalt besonders dazu geeignet hohe statische Lasten aufzunehmen. Um eine hohe Dämpfung zu erhalten, weisen die Hydrofedern eine Einrichtung mit hydraulischem Wirkprinzip auf. Bei der vorbekannten Hydrofeder ist diese Einrichtung durch einen teilweise mit Flüssigkeit befüllten Raum gebildet, wobei eine Planscherscheibe, die aus dem Traglager ausgebildet ist, in die Flüssigkeit ragt. Oberhalb des Flüssigkeitsspiegels befindet sich ein Luftraum, dessen Volumen sich je nach Verformung der Feder verändert. Dieser Luftraum bildet demnach ein Speichervolumen.

### Darstellung der Erfindung

Der Erfindung liegt die Aufgabe zugrunde, die vorbekannte Hydrofeder derart weiterzuentwickeln, dass diese bei einem vorteilhaften Dämpfungsverhalten eine geringe Bauhöhe aufweist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist der Topf mit Einrichtungen verbunden, die außerhalb des Raums angeordnet sind. Die Einrichtung ist fluidleitend, stoffstrombeeinflussend und mit Strömungsverlusten behaftet. Durch die Einrichtung wird die Dämpfungsfunktion der Hydrofeder nach außerhalb verlagert und es können Einbauten in das Hydrolager entfallen, die einen erhöhten Bauraumbedarf haben. Des Weiteren ist es dadurch möglich, mehrere Hydrofedern hydraulisch miteinander zu verkoppeln und dadurch ein abgestimmtes Dämpfungs- und/oder Tilgungs- und/oder Federungsverhalten mehrerer Hydrofedern zu erreichen. Die erfindungsgemäße Hydrofeder weist einen einfachen Aufbau auf und kann durch verschiedene Einbauten ergänzt werden. Es ist ebenfalls möglich, die Hydrofeder ohne den Topf also nur mit Feder und Auflager und damit ohne Flüssigkeitsdämpfung zu montieren. Dazu kann die Federanordnung auf einem kontaktreduzierenden Hilfsring montiert werden. Diese Federanordnung fungiert dann als reine Primärfeder zur Lagerung von Maschinenelementen. Die Feder ist als Verbundteil ausgebildet und besteht aus einem elastomeren Werkstoff, beispielsweise Naturkautschuk. Die Feder weist einen Anschlussabschnitt auf, der der Verbindung der Feder mit dem Traglager dient. Dieser Anschlussabschnitt besteht aus einem metallischen Werkstoff. Das Traglager und das Auflager bestehen vorzugsweise ebenfalls aus einem metallischen Werkstoff. Die konusförmige Feder weist einen kreisförmigen Querschnitt auf. In anderen Ausführungen sind auch Federn mit rechteckigem oder ovalem Wuerschnitt denkbar. Dabei sind alle Federn so gestaltet, dass sie geeignet sind, hohe statische Lasten aufzunehmen.

Die Einrichtung und/oder der Topf kann zumindest ein Anschlusselement umfassen. Dieses Anschlusselement ist vorzugsweise als Rohrstutzen ausgebildet der die strömungsleitende Verbindung zwischen dem durch den Federkörper und den Topf begrenzten Raum und den extern angeordneten Einrichtungen darstellt. Der Rohrstutzen besteht vorzugsweise aus einem metallischen Werkstoff und kann als Anschweißnippel ausgebildet sein. Das bedeutet, dass er stoffschlüssig mittels einer Schweißverbindung mit dem Topf verbunden ist. Der Rohrstutzen kann auf der dem Topf zugewandten Seite flach, beispielsweise flachoval und auf der dem Topf abgewandten Seite rund ausgebildet sein. An dieser Seite kann auch ein Flansch vorgesehen sein. Der flachovale Abschnitt ermöglicht eine geringe Bauhöhe des Topfes und der runde Abschnitt ist strömungsgünstig. An das Anschlusselement können Rohre, Schläuche, Ventile oder andere fiuidführende Elemente angeschlossen werden

Die Länge des Anschlusselementes kann so gewählt sein, dass dieser als Dämpfungskanal wirksam ist. Dabei wird, falls ein Rohrstutzen zum Einsatz gelangt, die Länge des Rohrstutzens so gewählt, dass sich bei bestimmten zu dämpfenden Frequenzen, die im Bereich der Resonanz der Hydrofeder liegen, eine schwingende Flüssigkeitssäule in dem Rohrstutzen ergibt, die zu einer hohen Dämpfung führt. Es kann auch das an das Anschlusselement angeschlossene Rohr oder Schlauch auch zusammen mit dem Anschlusselement als Dämpfungskanal wirksam sein.

Die Einrichtung kann mit zumindest einem Druckspeicher oder mit einem Ausgleichsvolumen verbindbar sein. Dabei kann der Druckspeicher aus einem Behälter mit nur einem Zugang bestehen oder es können mehrere Hydrofedern an einen Druckspeicher angeschlossen werden, die dadurch miteinander verkoppelt sind. Des Weiteren kann der Druckspeicher so ausgebildet sein, dass der Druck in dem Druckspeicher regelbar ist. Um beispielsweise den Druck in Abhängigkeit von dem auf den Hydrofedern lastenden statischen Druck abzustimmen.

Die Einrichtung kann mit zumindest einer Armatur verbindbar sein. Die Armatur bildet ein strömungsregulierendes Element und kann als Ventil, Klappe, Drossel oder ähnliches ausgebildet sein. Ein Kugelhahn angeordnet an dem Topf ermöglicht ein werksseitiges befüllen der Hydrofeder mit der Flüssigkeit. Ein Kugelhahn angeordnet an der Einrichtung, beispielsweise dem Druckspeicher, ermöglicht ein werksseitiges befüllen des Druckspeichers mit der Flüssigkeit. Anschließend kann die befüllte Hydrofeder montiert und mit den hydraulischen Einrichtungen verbunden werden. Dadurch vereinfacht sich die Montage.

Ein Abschnitt des Topfs kann drucknachgiebig ausgebildet sein. Dazu kann ein Abschnitt der Wand des Topfs durch eine elastomere Wand gebildet sein. Zusätzlich kann die elastomere Wand durch federnde metallische Elemente, beispielsweise Stahlfedem oder Metallmembranen gestützt werden. Der drucknachgiebige Abschnitt verformt sich in Abhängigkeit des Drucks der in dem Raum herrscht. Durch diese Verformung ändern sich die Feder- und Dämpfungseigenschaften der Hydrofeder. Die Feder- und Dämpfungseigenschaften können unabhängig von den Eigenschaften der Feder durch Auslegung des drucknachgiebigen Abschnitts auf den jeweiligen Anwendungsfall angepasst werden.

In dem Topf kann eine Membran vorgesehen sein. Dabei ist der Raum mit Flüssigkeit befüllt und der Raum unterhalb der Membran mit einem unter Atmosphärendruck stehenden Gas, beispielsweise mit der Umgebungsluft. Die Membran kann rollbalgförmig ausgebildet sein und kann dadurch drucklos Volumen aufnehmend in den Ausgleichsraum verdrängt werden. Die Membran kann in anderen Ausführungen auch Blähfedereigenschaften aufweisen. Der Topf kann Ausnehmungen unterhalb der Membran aufweisen, wodurch sich eine Verbindung zur Umgebung ergibt. Durch die Membran reduziert sich die Blähsteifigkeit der Hydrofeder.

In dem Raum kann eine Düsenplatten-Anortinung vorgesehen sein. Die Düsenplatten-Anordnung ist in dem Raum montiert und unterteilt den Arbeitsraum in einen Arbeitsraum und einen Ausgleichsraum. Die Düsenplatten-Anordnung bewirkt bei bestimmten Frequenzen eine hydraulische Entkopplung der beiden Räume und dadurch eine verringerte Dämpfung und Steifigkeit. Es ist auch möglich, dass die Düsenplatten-Anordnung in der Einrichtung angeordnet ist.

Der Topf kann flüssigkeitsdicht, vorzugsweise kraftschlüssig mit der Feder verbunden sein. Dazu können Feder und Topf mittels Schraubverbindungen fluiddicht montiert werden, wobei dann Feder und Topf entsprechende Bohrungen aufweisen. In anderen Ausgestaltungen können Topf und Feder über eine besondere Ausgestaltung der sich berührenden Wände kraftschlüssig miteinander verbunden sein. Es können an den sich berührenden Abschnitten separate Dichtelemente, beispielsweise O-Ringe vorgesehen werden. Es ist auch möglich, Topf und Feder stoffschlüssig zu verbinden oder, beispielsweise mittels einer Bajonett-Verschraubung, formschlüssig zu verbinden.

Der Topf kann einen zylindrischen Wandabschnitt aufweisen, der abschnittsweise als zentrierring ausgebildet ist. Die Feder weist in dieser Ausführung einen zylindrischen Wandabschnitt auf in den der Zentrierring eingepresst wird. Dazu sind die Durchmesser des Wandabschnitts und des Zentrierrings so gewählt, dass sich eine Presspassung und damit eine kraftschlüssige Verbindung ergibt.

Verwendung einer Hydrofeder nach einem der vorherigen Ansprüche zur Lagerung in Drehgestellen eines Schienenfahrzeugs. Derartige Anwendungen sind durch eine hohe statische Last und durch dynamische Lasten durch Erschütterungen gekennzeichnet. Zur Aufnahme hoher statischer Lasten ist die Feder daher als Konusfeder ausgebildet. Die Hydrofedern werden zwischen dem Achslager der Achse des Drehgestells und dem Drehgestellrahmen montiert. In diesem Bereich ist die Bauhöhe begrenzt, wodurch die erfindungsgemäße Hydrofeder zur Lagerung von Drehgestellen besonders geeignet ist.

### Kurzbeschreibung der Zeichnung

Einige Ausführungsbeispiele der erfindungsgemäßen Hydrofeder werden nachfolgend anhand der Figuren näher erläutert. Diese zeigen, jeweils schematisch:
- Fig. 1: eine erfinderische Hydrofeder,
- Fig. 2: eine Hydrofeder mit einem Topf mit teilweise elastischer Wandung;
- Fig. 3: eine Hydrofeder mit einer integrierten Membran;
- Fig. 4: eine Hydrofeder mit einer integrierten Düsenplatten-Anordnung.

### Ausführung der Erfindung

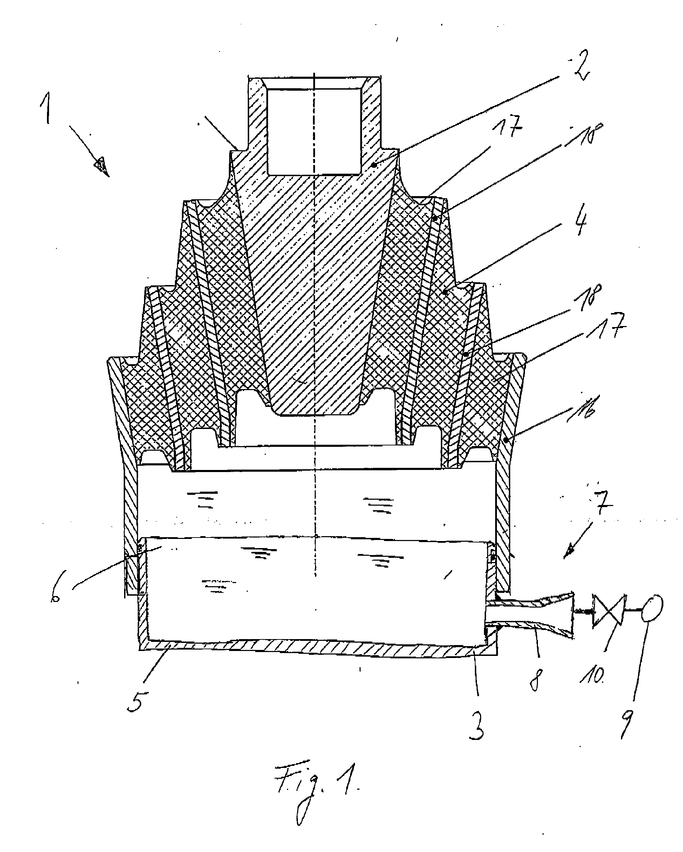

Figur 1 zeigt eine Hydrofeder 1 mit einem Traglager 2 aus metallischem Werkstoff und einem Auflager 3 ebenfalls aus metallischem Werkstoff. Traglager 2 und Auflager 3 sind durch die Feder 4 miteinander verbunden, wobei die Feder 4 konusförmig ausgebildet ist Die Feder 4 ist ein Verbundteil und besteht aus drei Federabschnitten 17 aus elastomerem Werkstoff, die über Zwischenstücke 18 aus metallischem Werkstoff miteinander verbunden sind. An die Feder 4 ist ein zylindrischer Wandabschnitt 16 anvulkanisiert, der auf an dem freien Ende als Zentrierring ausgebildet ist. Das Auflager 3 ist als Topf 5 ausgebildet und weist ebenfalls einen zylindrischen Wandabschnitt auf. Der zylindrische Wandabschnitt 16 der Feder 4 ist mittels einer Presspassung flüssigkeitsdicht mit dem Auflager 3 verbunden, wodurch sich eine kraftschlüssige Verbindung ergibt. Die Feder 4 und der Topf 5 begrenzen einen Raum 6 der mit Flüssigkeit befüllt ist. Der Topf 5 ist mit Einrichtungen 7 verbunden, die außerhalb des Raums 6 angeordnet sind. In dieser Ausführung umfasst die Einrichtung 7 ein Anschlusselement in dieser Ausführung ein Rohrstutzen 8, der an den Topf 5 angeschweißt ist. Der Rohrstutzen 8 ist im Bereich des Topfs 5 flach und an seinem freien Ende rund ausgebildet. Die Länge des Rohrstutzens 8 ist so gewählt, dass dieser als Dämpfungskanal wirksam ist. An dem freien Ende des Rohrstutzens 7 ist eine Armatur 10, in dieser Ausführung ein Kugelhahn befestigt. An die Armatur 10 schließt sich ein Druckspeicher 9 an. In anderen Ausführungen kann auch statt des Druckspeichers 9 eine andere hydraulische Komponente, beispielsweise eine Regeleinrichtung oder eine Pumpe vorgesehen sein. Die Hydrofeder 1 wird in der Lagerung eines Drehgestells eines Schienenfahrzeugs eingesetzt.

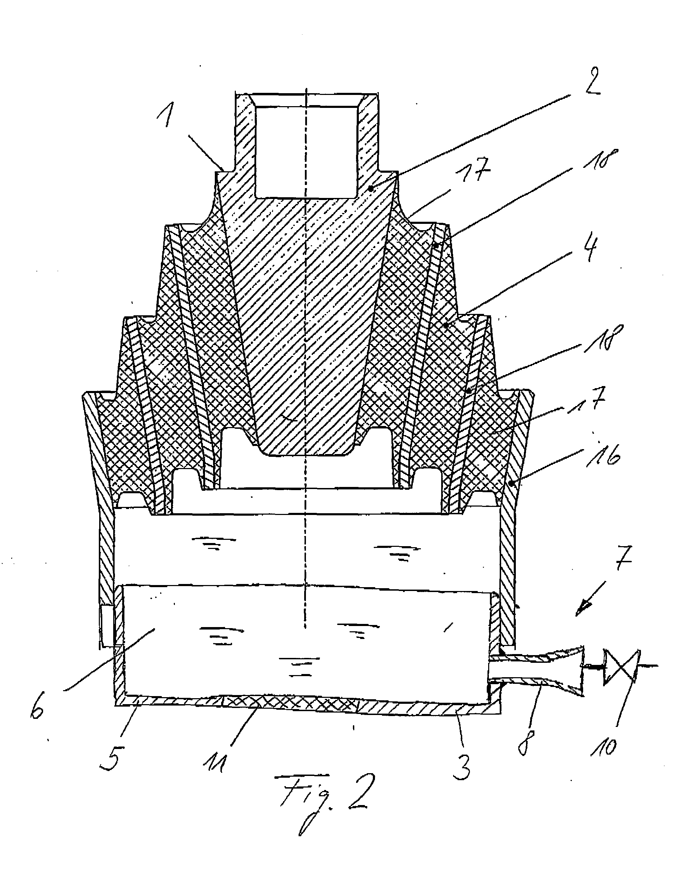

Figur 2 zeigt eine Hydrofeder 1 gemäß Figur 1. In dieser Ausgestaltung ist ein Abschnitt 11 des Topfs 5 drucknachgiebig ausgebildet. Dazu weist der Topf 5 im Bereich des Abschnitts 11 eine Ausnehmung auf, in der ein Element entsprechender Größe bestehend aus einem elastomeren Werkstoff befestigt ist.

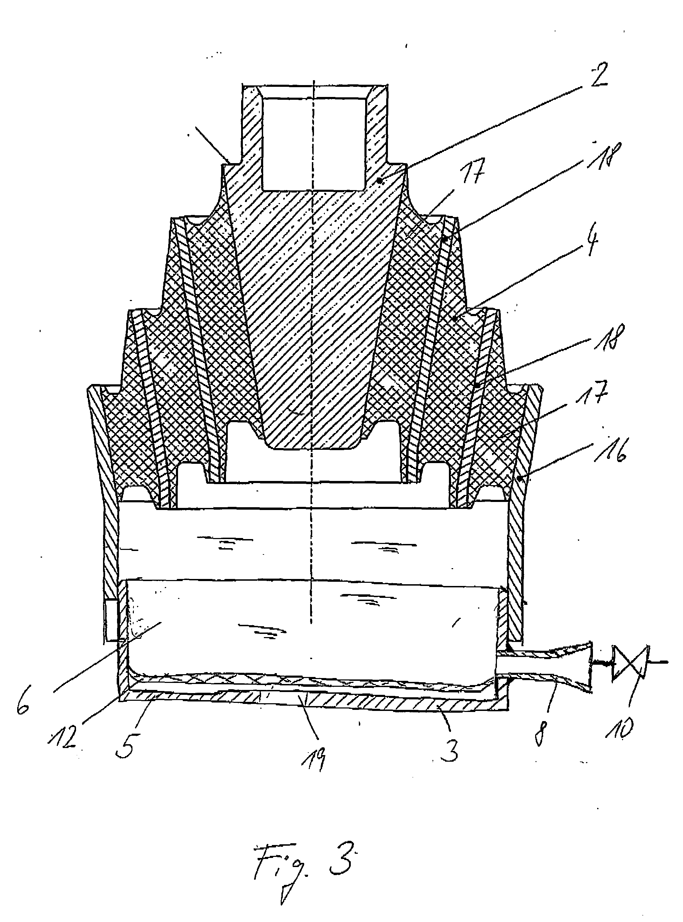

Figur 3 zeigt eine Hydrofeder 1 gemäß Figur 1. In dieser Ausgestaltung ist in dem Topf 5 eine Membran 12 vorgesehen, die den Raum 6 in einen Arbeitsraum 13 und einen Ausgleichsraum 14 unterteilt. Der Topf 5 weist im Boden eine Bohrung 19 auf, durch die der Ausgleichsraum 14 mit der Umgebung verbunden ist.

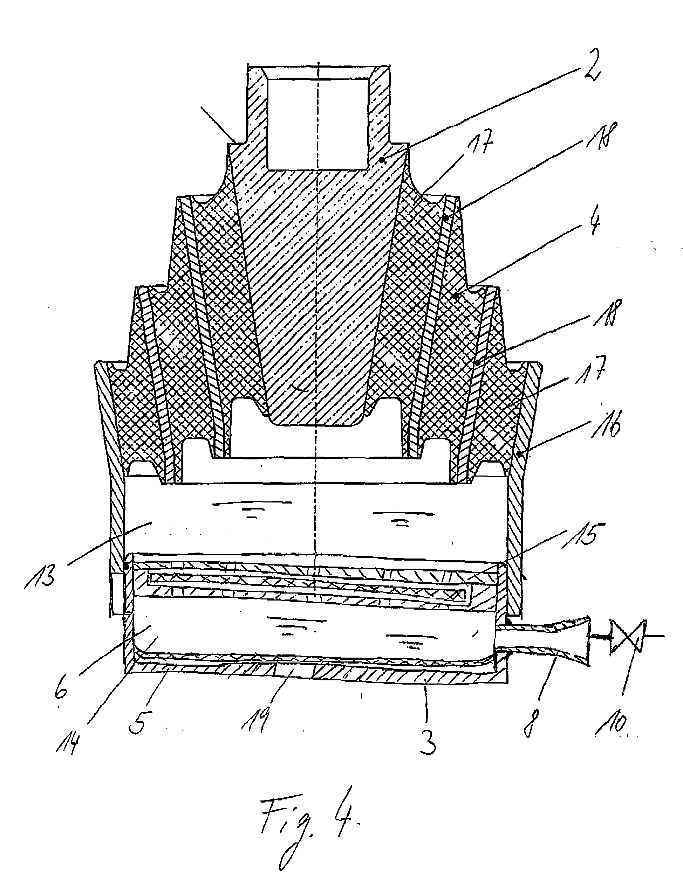

Figur 4 zeigt eine Hydrofeder 1 gemäß Figur 3. In dieser Ausführung ist in dem Raum 6 eine Düsenplatten-Anordnung 15 vorgesehen.

## Patentansprüche

1. Hydrofeder (1), umfassend ein Traglager (2) und ein Auflager (3) die durch eine konusförmige Feder (4) miteinander verbunden sind, wobei das Auflager (3) als Topf (5) ausgebildet ist und die Feder (4) und der Topf (5) einen Raum (6) begrenzen der zumindest teilweise mit Flüssigkeit befüllt ist, **dadurch gekennzeichnet, dass** der Topf (5) mit Einrichtungen (7) verbunden ist, die außerhalb des Raums (6) angeordnet sind.

2. Hydrofeder nach Anspruch 1, **dadurch gekennzeichnet, dass** der Topf (5) und/oder die Einrichtung (7) zumindest ein Anschlusselement (8) umfasst.

3. Hydrofeder nach Anspruch 2, **dadurch gekennzeichnet, dass** die Länge des Anschlusselementes (8) so gewählt ist, dass dieses als Dämpfungskanal wirksam ist.

4. Hydrofeder nach einem der Ansprüche 1 bis 3, **dadurch gekennzeichnet, dass** die Einrichtung (7) mit einem Druckspeicher (9) verbindbar ist.

5. Hydrofeder nach einem der Ansprüche 1 bis 4, **dadurch gekennzeichnet, dass** die Einrichtung (7) mit einer Armatur (10) verbindbar ist.

6. Hydrofeder nach einem der Ansprüche 1 bis 5, **dadurch gekennzeichnet, dass** ein Abschnitt (11) des Topfs (5) drucknachgiebig ausgebildet ist.

7. Hydrofeder nach einem der Ansprüche 1 bis 6, **dadurch gekennzeichnet, dass** in dem Topf (5) eine Membran (12) vorgesehen ist, die eine Begrenzungswand des Raums (6) bildet.

8. Hydrofeder nach einem der Ansprüche 1 bis 7, **dadurch gekennzeichnet, dass** in dem Raum (6) eine Düsenplatten-Anordnung (15) vorgesehen ist.

9. Hydrofeder nach einem der Ansprüche 1 bis 8, **dadurch gekennzeichnet, dass** der Topf (5) flüssigkeitsdicht mit der Feder (4) verbunden ist.

10. Hydrofeder nach einem der Ansprüche 1 bis 8, **dadurch gekennzeichnet, dass** der Topf (5) einen zylindrischen Wandabschnitt (16) aufweist, der abschnittsweise als Zentrierring ausgebildet ist.

11. Verwendung einer Hydrofeder (1) nach einem der vorherigen Ansprüche zur Lagerung in Drehgestellen eines Schienenfahrzeugs.
